# EUROPEAN PATENT SPECIFICATION

(11) **EP 3 739 728 B1**
(45) Date of publication and mention of the grant of the patent: **06.05.2026**
(21) Application number: 19174125.5
(22) Date of filing: 13.05.2019
(51) Int. Cl.: H02K 5/20

(54) **TWO-PIECE STATOR HOUSING**
ZWEITEILIGES STATORGEHÄUSE
BOÎTIER DE STATOR EN DEUX PARTIES

(43) Date of publication of application: 18.11.2020
(73) Proprietor: CIMOS d.d., 6000 Koper (SI)
(72) Inventor: PREGELJ, Borut, 5272 PODNANOS (SI)
(74) Representative: BARRE LAFORGUE

(56) References cited:
- DE-A1- 102013 200 105
- DE-A1- 4 104 740
- FR-A1- 3 038 795
- KR-A- 20110 089 717
- US-A1- 2012 025 638
- US-A1- 2012 074 799

## Description

### Technical Field

The invention relates to a two-piece housing for enclosing a stator core of an electric machine. It also concerns an electric machine and a vehicle.

### Background Art

Electric machines, such as generators and motors, which operate at a high performance level, usually generate excessive heat in the stator core and stator windings. Such heat can cause damage and/or reduction in performance or life of the electric machine.

In that case, for instance, one can remove the heat by providing the electric machine with a water jacket having fluid passages through which a coolant fluid, such as water, is circulated.

However, with this arrangement, the positioning of the water inlet/outlet is sometimes limited to specific locations on the water jacket.

This creates an undesired situation where positioning a conduit, such as a water inlet/outlet, wherever necessary on the water jacket, is not easy.

Patent documents US2012/025638A1, KR2011/0089717A, DE4104740A1 and FR3038795A1 disclose embodiments of electric machines comprising a housing with cooling channels.

### Summary of Invention

The present invention provides an electric machine as described in the accompanying claims. It also provides a vehicle.

The dependent claims will present some specific embodiments of the invention.

These and other aspects of the invention will become apparent from the description of the invention which follows below.

### Brief description of drawings

The description will describe further details, aspects and embodiments of the present invention, by way of example only, with reference to the drawings. In the drawings, like reference numbers identify like or similar elements. Elements in the figures are illustrated for simplicity and clarity and are not necessarily drawn to scale.
Fig. 1 is a schematic cross-sectional diagram of an electric motor.
Fig. 2 is a cross-sectional view of the housing and the stator core of Fig. 1.
Fig. 3 is a detailed view of Fig. 2.
Figs. 4a, 4b, 5a, 5b, 6a, 6b, 7a and 7b are other detailed views of Fig. 2.

### Description of embodiments

In order to solve the problem of easily positioning a conduit on a water jacket wherever necessary, the present invention provides a two-piece housing for enclosing a stator core of an electric machine.

According to the invention, the two-piece housing enables direct liquid cooling of the stator core and indirect liquid cooling of the stator winding.

In particular, the two-piece housing is so arranged to provide at least one free space in radial direction at any circumference angle. This way, at that location, one can easily position a conduit, such as a water inlet/outlet, wherever necessary on the two-piece housing.

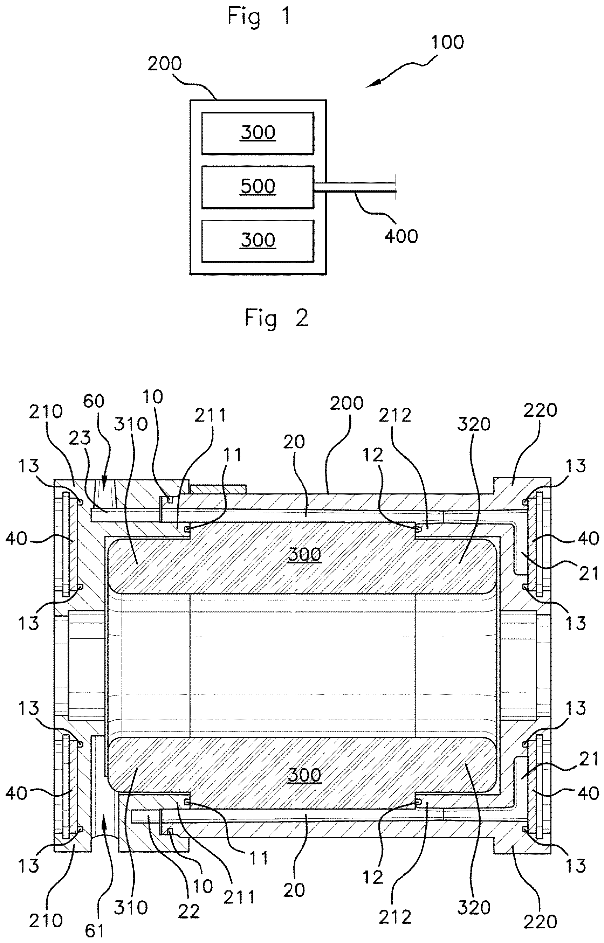

Fig. 1 illustrates an exemplary electric machine in accordance with embodiments of the present invention. In Fig. 1, the electric machine is an electric motor 100. However, one should note that one can use the teachings of the present invention with other electric motor configurations and other electric machines such as generators.

In Fig. 1, electric motor 100 comprises a housing 200, a stator core 300, a shaft 400, and a rotor 500.

Stator core 300 is made of a permeable magnetic material and is typically formed of laminations (not shown). Stator core 300 is substantially annular and generally surrounds rotor 500. Stator core 300 is arranged to remain stationary relative to housing 200 during operation of electric motor 100.

Rotor 500 and shaft 400 are fixed together for unitary rotation. In particular, rotor 500 and shaft 400 can be rotated relative to housing 200 and stator core 300.

Referring to Fig. 2, stator core 300 comprises a front end and a rear end.

Stator core 300 further comprises a stator winding provided with a front end winding portion 310 and a rear end winding portion 320 which, respectively, protrude from the front end and the rear end of stator core 300.

In Fig. 2, housing 200 is a two-piece housing defining an interior volume when combined. In particular, housing 200 comprises a housing cover 210 and a main housing 220 which are respectively arranged at the front axial end portion and rear axial end portion of electric motor 100.

Housing cover 210 includes an inner wall. The inner wall of housing cover 210 is provided with a first protruding portion 211 which protrudes towards the front end of stator core 300 and over the front end winding portion 310.

Main housing 220 includes an open end and a closed end.

The open end of main housing 220 is removably attachable to housing cover 210.

The closed end of main housing 220 includes an inner wall.

The inner wall of the closed end of main housing 220 is provided with a second protruding portion 212 which protrudes towards the rear end of stator core 300 and over the rear end winding portion 320.

In an embodiment, housing cover 210 and main housing 220 are arranged to be sealed together with suitable sealing elements such as O-rings. However, other sealing means can be contemplated.

In particular, the open end of main housing 220 is arranged to be sealed to housing cover 210 with a first sealing element 10 such that the coolant fluid does not leak from housing 200 to the environment. In the example of Fig. 2, first sealing element 10 seats in a radial groove formed in an outer wall of main housing 220.

In addition, first protruding portion 211 is arranged to be sealed to the front end of stator core 300 with a second sealing element 11 such that the coolant fluid does not leak inwardly to the stator winding. In the example of Fig. 2, second sealing element 11 seats in an axial groove formed in a face of first protruding portion 211 which contacts the front end of stator core 300.

Furthermore, second protruding portion 212 is arranged to be sealed to the rear end 311 of stator core 300 with a third sealing element 12 such that the coolant fluid does not leak inwardly to the stator winding. In the example of Fig. 2, third sealing element 12 seats in an axial groove formed in a face of second protruding portion 211 which contacts the rear end of stator core 300.

Referring to Fig. 2, housing 200 includes an inner wall facing the interior volume.

In particular, when housing 200 encloses stator core 300, the inner wall of housing 200 is arranged to define a plurality of spaced coolant channels 20. In the invention, coolant channels are axially extending over stator core 300 and first and second protruding portions 211, 212.

In Fig. 2, coolant channels 20 are sandwiched between, on one side by the inner wall of housing 200, and on the opposite side by an outer surface of stator core 300 and first and second protruding portions 211, 212.

This arrangement allows a coolant fluid to flow in coolant channels 20 directly in contact with an outer surface of stator core 300, thereby allowing better heat removal.

In an example, a suitable coolant fluid may include transmission fluid, ethylene glycol, an ethylene glycol/water mixture, water, oil, motor oil, a gas, a mist, any combination thereof, or another substance.

Housing 200 further includes a plurality of first connecting fluid passages 21.

The plurality of first connecting fluid passages 21 is arranged to transfer the coolant fluid between adjacent coolant channels 20. However, one should note that in the invention, the term "adjacent" means that one coolant channel 20 is disposed "adjacent to" coolant channel 20, but not necessarily contiguous.

In the invention, first connecting fluid passages 21 are provided in the inner wall of housing cover 210 and in the inner wall of the closed end of main housing 220.

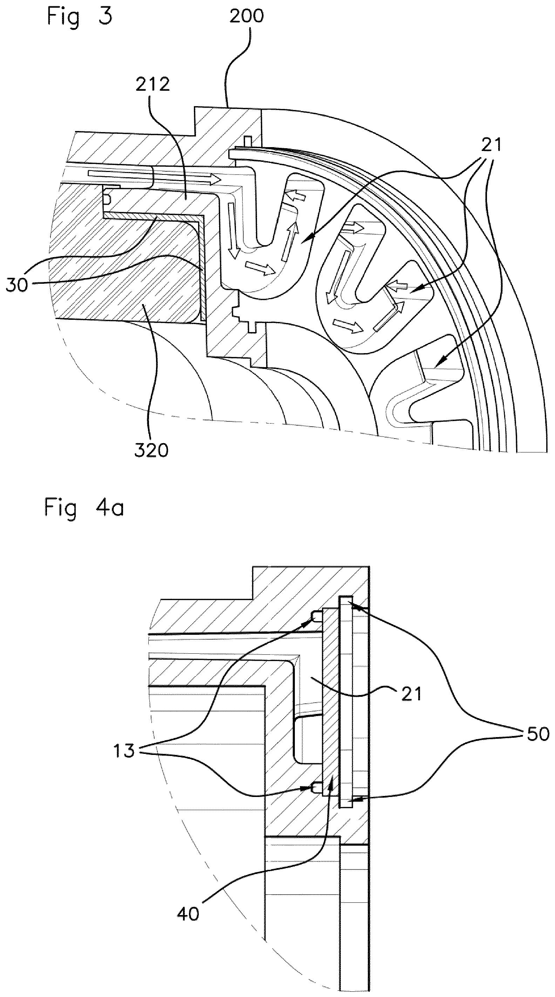

Fig. 3 illustrates an embodiment where first connecting fluid passages 21 are U-shaped. This arrangement allows having a high surface contact with the coolant fluid. However, other shapes can be contemplated.

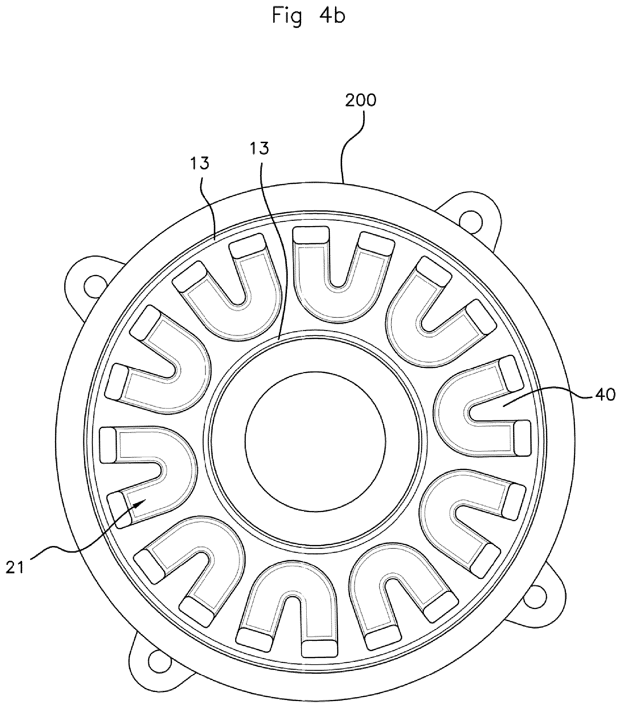

In an embodiment, as illustrated in Figs. 4a and 4b, first connecting fluid passages 21 are closed with a single ring-shaped plate 40 which is sealed with suitable sealing elements such as O-rings. In an example, single ring-shaped plate 40 is formed in stamped sheet metal. In the example of Figs. 4a and 4b, sealing is done with two fourth sealing elements 13. Furthermore, single ring-shaped plate 40 can be held in place with retaining rings (not shown) which are arranged to be received in retaining grooves 50. This arrangement has the effect of distributing forces evenly on fourth sealing elements 13 over the whole circumference of single ring-shaped plate 40.

One should note that the above arrangement of coolant channels 20 does not allow the coolant fluid to flow directly in contact with the stator winding. Indeed, in the present invention, the coolant fluid flowing in coolant channels 20 is indirectly in contact with the stator winding.

In practice, returning to Fig. 3, housing 200 is so arranged to create a first gap between first protruding portion 211 and front end winding portion 310. Also, housing 200 is further arranged to create a second gap between second protruding portion 212 and rear end winding portion 320. Moreover, in the invention, the first and second gaps are filled with a thermally conductive and electrically insulating material 30.

In an example, suitable materials for thermally conducting and electrically insulating material 30 may be thermal paste. For instance, thermally conducting and electrically insulating material 30 may be an epoxy or silicon resin that is filled with thermally conductive, electrically insulating fillers such as alumina and/or boron nitride.

Returning to Fig. 2, housing 200 further includes at least one second connecting fluid passage 22.

Similarly to the plurality of first connecting fluid passages 21, second connecting fluid passage 22 is arranged to transfer the coolant fluid between adjacent coolant channels 20.

However, in the invention, second connecting fluid passage 22 is provided in first and/or second protruding portions 211, 212.

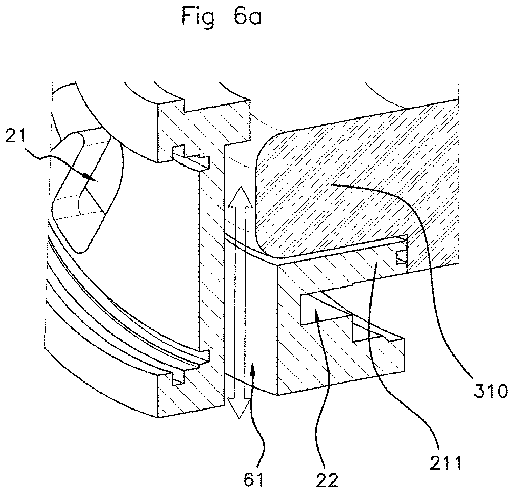

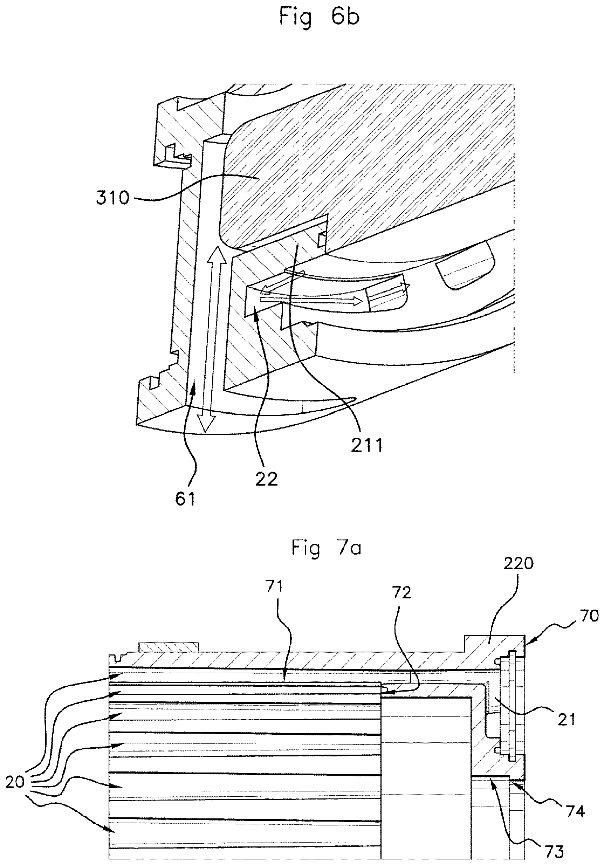

Figs. 6a and 6b illustrate an embodiment where second connecting fluid passage 22 is a transverse passage. In particular, for instance, second connecting fluid passage 22 may extend substantially perpendicularly to the main axis of stator core 300 when installed.

In the example of Fig. 2, second connecting fluid passage 22 is provided on housing cover 210, more particularly on first protruding portion 211.

However, in an embodiment, second connecting fluid passage 22 is provided on main cover 220, more particularly on second protruding portion 212.

Moreover, in another embodiment, a plurality of second connecting fluid passages 22 is provided on both housing cover 210 and main cover 220, more particularly on first and second protruding portions 211, 212.

Still in Fig. 2, housing 200 further includes at least one coolant channel end 23.

In the invention, coolant channel end 23 is arranged to prevent the coolant fluid to flow between adjacent coolant channels 20.

Similarly to second connecting fluid passage 22, coolant channel end 23 is provided in first and/or second protruding portions 211, 212.

In the example of Fig. 2, coolant channel end 23 is provided on housing cover 210, more particularly on first protruding portion 211.

However, in an embodiment, coolant channel end 23 is provided on main cover 220, more particularly on second protruding portion 212.

Moreover, in another embodiment, a plurality of coolant channel ends 23 is provided on both housing cover 210 and main cover 220, more particularly on first and second protruding portions 211, 212.

One should note that, along with first connecting fluid passages 21, the invention can be contemplated with second connecting fluid passage 22 and/or coolant channel end 23.

In particular, a first embodiment of the invention only contemplates using first connecting fluid passages 21 with second connecting fluid passage 22. A second embodiment of the invention only contemplates using first connecting fluid passages 21 with coolant channel end 23. And a third embodiment of the invention contemplates using first connecting fluid passages 21 with second connecting fluid passage 22 and coolant channel end 23.

Returning to Fig. 2, housing 200 further comprises at least one conduit 60, 61 formed radially through an outer wall of housing 200. Conduit 60, 61 is formed at a space arranged in first and/or second protruding portions 211, 212. In particular, the space is located between, on the one hand, second connecting fluid passage 22 and/or coolant channel end 23, and, on the other hand, the inner wall of housing cover 210 and/or the inner wall of the closed end of main housing 220.

In an example one conduit 60, 61 is a drilled hole or a precast hole.

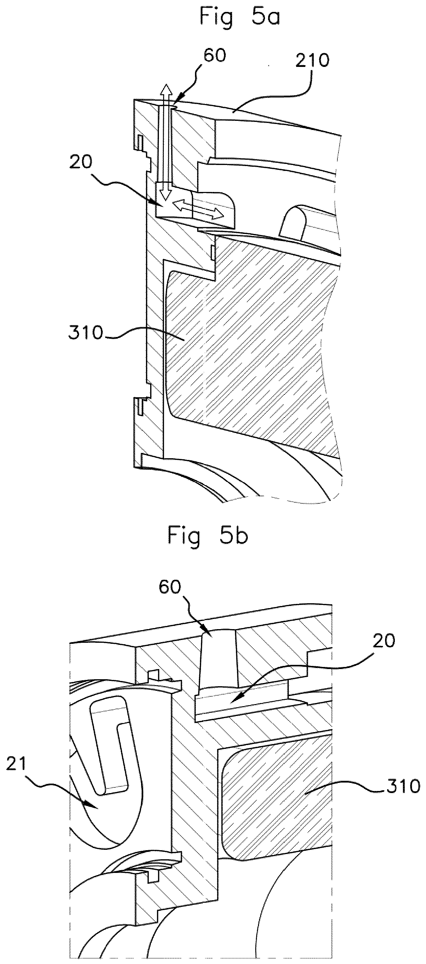

In an embodiment, as partially illustrated in Figs. 5a and 5b, housing 200 comprises two conduits 60 and one second connecting fluid passages 22 and/or two coolant channel ends 23. In that case, each conduit is a liquid conduit 60 which is fluidly coupled to one of second connecting fluid passage 22 and two coolant channel ends 23.

This arrangement has the effect of allowing the flow of the coolant to and from the two liquid conduits 60. Indeed, the two liquid conduits 60 can be seen as inlet and outlet ports for the liquid coolant. In that particular arrangement, the two liquid conduits 60 are positioned one beside the other and separated with the longest coolant path.

In a particular embodiment, the two liquid conduits 60 are not fluidly coupled to one of second connecting fluid passage 22 and two coolant channel ends 23. In that case, the two liquid conduits 60 can be casted or drilled somewhere on the cooling channels 20 in radial direction such that coolant flows from a first liquid conduit 60 in both directions towards a second liquid conduit 60. In that particular embodiment, the two liquid conduits 60 should be positioned as far as possible from each other.

In another embodiment, the conduit is an electrical conduit 61 which is electrically coupled to front end winding portion 310 or rear end winding portion 320.

This arrangement allows the stator winding to be coupled to a power source.

Also, electrical conduit 61 can be formed by directly going through housing 200 without having to go around coolant channels 20. Furthermore, electrical conduit 61 does not have to be sealed from the coolant fluid since the coolant fluid is isolated away.

According to a preferred embodiment of the invention, housing 200 comprises two liquid conduits 60 and one electrical conduit 61.

The embodiments of the invention allow for easy positioning of parts. Indeed, most reference surfaces for positioning are located on main housing such that large tolerances are possible due to small tolerance stack.

With respect to main housing 220, Fig. 7a shows a reference plane 70, a radial positioning surface 71 of stator core 300, an axial positioning surface 72 of stator core, a radial positioning surface 73 of a rear motor bearing and an axial positioning surface 72 of the rear motor bearing.

Housing cover is arranged to be radially positioned on main housing, thereby giving good reference for radial positioning of a front rotor bearing.

Furthermore, housing cover is arranged to be axially positioned on stator core 300, thereby allowing for large tolerances of stator core laminations.

Moreover, one should note that the large tolerance of housing cover has no effect on a front rotor bearing, since said front rotor bearing has to be floating in axial direction.

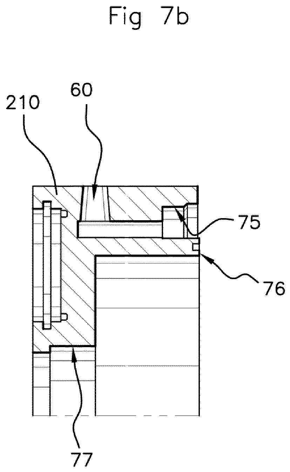

With respect to cover housing 210, Fig. 7b shows a radial positioning surface 75 on main housing 300, an axial positioning surface 76 on stator core 300 and, a radial positioning surface 77 of a front motor bearing.

Also, shaft 400 output can be positioned in any or both axial direction of housing 200.

The particular arrangement of the present invention eliminates the need for a separate carrier and housing.

Furthermore, the internal design of housing 200 is so designed that it is castable using conventional casting technologies without the need for sand cores. For example, one could use casting technology of gravity, low or high pressure die casting. Also, housing 200 can be produced by using conventional methods of aluminium forging or impact forming. However, other unconventional manufacturing methods are contemplated.

The embodiments of the invention also cover a vehicle, in particular automotive, more particularly electric or hybrid vehicle, comprising electric motor 100 and/or housing 200.

While the above description constitutes the preferred embodiment, one should appreciate that the present invention is defined by the accompanying claims.

## Claims

1. An electric machine (100) comprising a two-piece housing (200) and a stator core (300) enclosed in said two-piece housing (200),
- the stator core having
- a front end and a rear end, and
- a stator winding provided with a front end winding portion (310) and a rear end winding portion (320) which, respectively, protrude from the front and rear ends of the stator core,
- the two-piece housing comprising a housing cover (210) and a main housing (220),
- the housing cover having an inner wall,
- the inner wall being provided with a first protruding portion (211) which protrudes towards the front end of the stator core and over the front end winding portion,
- the main housing having an open end and a closed end,
- the open end being removably attachable to the housing cover,
- the closed end having an inner wall provided with a second protruding portion (212) which protrudes towards the rear end of the stator core and over the rear end winding portion,
wherein,
- the two-piece housing has an outer wall and an inner wall,
- the inner wall of the two-piece housing being arranged to, when the two-piece housing encloses the stator core, define a plurality of spaced coolant channels (20) which are axially extending over the stator core and the first and second protruding portions, thereby allowing a coolant fluid to flow in the channels directly in contact with an outer surface of the stator core, the coolant fluid flowing in coolant channels (20) being indirectly in contact with the stator winding, wherein,
- the two-piece housing further comprises a plurality of first connecting fluid passages (21) and at least one second connecting fluid passage (22),
- the plurality of first connecting fluid passages and the second connecting fluid passage being arranged to transfer the coolant fluid between adjacent coolant channels,
- the plurality of first connecting fluid passages being provided in the inner wall of the housing cover and in the inner wall of the closed end of the main housing, and the second connecting fluid passage being provided in the first and/or second protruding portions,
wherein,
- the two-piece housing further comprises at least one conduit (60, 61) formed radially through the outer wall of the two-piece housing, at a space arranged in the first and/or second protruding portions, between, on the one hand, the second connecting fluid passage, and, on the other hand, the inner wall of the housing cover and/or the inner wall of the closed end of the main housing.

2. The electric machine of claim 1, wherein the two-piece housing (200) is further arranged to:
- create a first gap between the first protruding portion and the front end winding portion, and
- create a second gap between the second protruding portion and rear end winding portion,
wherein the first and second gaps are filled with a thermally conductive and electrically insulating material (30).

3. The electric machine of any one of claims 1 to 2, wherein the first and second protruding portions are arranged to be sealed to the front end and the rear end of the stator core, respectively.

4. The electric machine of any one of claims 1 to 3, wherein the first connecting fluid passages are U-shaped.

5. The electric machine of any one of claims 1 to 4, wherein the second connecting fluid passage is a transverse passage.

6. The electric machine of any one of claim 1 to 5, wherein the first connecting fluid passages are closed with a single ring-shaped plate (40).

7. The electric machine of any one of claim 1 to 6, in which the two-piece housing (200) comprises one second connecting fluid passages and two conduits, wherein each conduit is a liquid conduit fluidly coupled to one of the second connecting fluid passages, thereby allowing the flow of the coolant to and from the two conduits.

8. The electric machine of any one of claim 1 to 7, in which the two-piece housing (200) further comprises a coolant channel end (23), the coolant end being arranged to prevent the coolant fluid flow between adjacent coolant channels, and being provided in the first and/or second protruding portions,
wherein the conduit is formed at a space arranged in the first and/or second protruding portions, between, on the one hand, the coolant channel end, and, on the other hand, the inner wall of the housing cover and/or the inner wall of the closed end of the main housing.

9. The electric machine of any one of claims 1 to 7, wherein the second connecting fluid passage is replaced by a coolant channel end (23), the coolant channel end being arranged to prevent the coolant fluid flow between adjacent coolant channels.

10. The electric machine of claim 9, in which the two-piece housing (200) further comprises a second connecting fluid passage (22), the second connecting fluid passage arranged to transfer the coolant fluid between adjacent coolant channels, and being provided in the first and/or second protruding portions,
wherein the conduit is formed at a space arranged in the first and/or second protruding portions, between, on the one hand, the second connecting fluid passage, and, on the other hand, the inner wall of the housing cover and/or the inner wall of the closed end of the main housing.

11. The electric machine of any one of claim 1 to 10, wherein the conduit is an electrical conduit electrically coupled to the front end winding portion or the rear end winding portion, thereby allowing the stator winding to be coupled to a power source.

12. The electric machine of any one of claim 1 to 11, wherein the housing cover is arranged to be positioned radially on the main housing.

13. The electric machine of any one of claim 1 to 12, wherein the housing cover is arranged to be positioned axially on the stator core.

14. Vehicle, in particular automotive, more particularly electric or hybrid vehicle, comprising an electric machine according to any one of claims 1 to 13.

## Patentansprüche

1. Elektrische Maschine (100), umfassend ein zweiteiliges Gehäuse (200) und einen in dem zweiteiligen Gehäuse (200) eingeschlossenen Statorkern (300),
- wobei der Statorkern aufweist:
- ein vorderes Ende und ein hinteres Ende und
- eine Statorwicklung mit einem vorderen Wicklungsendabschnitt (310) und einem hinteren Wicklungsendabschnitt (320), die jeweils über das vordere Ende bzw. das hintere Ende des Statorkerns vorstehen,
- wobei das zweiteilige Gehäuse einen Gehäusedeckel (210) und ein Hauptgehäuse (220) umfasst,
- wobei der Gehäusedeckel eine Innenwand aufweist,
- wobei die Innenwand mit einem ersten Vorsprungsabschnitt (211) versehen ist, der in Richtung des vorderen Endes des Statorkerns und über den Wicklungsabschnitt des vorderen Endes vorsteht,
- wobei das Hauptgehäuse ein offenes Ende und ein geschlossenes Ende aufweist,
- wobei das offene Ende lösbar an dem Gehäusedeckel befestigbar ist,
- wobei das geschlossene Ende eine Innenwand aufweist, die mit einem zweiten Vorsprungsabschnitt (212) versehen ist, der in Richtung des hinteren Endes des Statorkerns und über den Wicklungsabschnitt des hinteren Endes vorsteht,
wobei
- das zweiteilige Gehäuse eine Außenwand und eine Innenwand aufweist,
- die Innenwand des zweiteiligen Gehäuses so angeordnet ist, dass sie, wenn das zweiteilige Gehäuse den Statorkern einschließt, eine Mehrzahl voneinander beabstandeter Kühlmittelkanäle (20) definiert, die sich axial über den Statorkern sowie den ersten und den zweiten Vorsprungsabschnitt erstrecken, wodurch ein Kühlfluid in den Kanälen in direktem Kontakt mit einer Außenoberfläche des Statorkerns strömen kann, wobei das in den Kühlmittelkanälen (20) strömende Kühlfluid mit der Statorwicklung indirekt in Kontakt steht, wobei
- das zweiteilige Gehäuse ferner eine Mehrzahl erster verbindender Fluiddurchgänge (21) und mindetens einen zweiten verbindenden Fluiddurchgang (22) umfasst,
- die Mehrzahl erster verbindender Fluiddurchgänge und der zweite verbindende Fluiddurchgang so angeordnet sind, dass sie das Kühlfluid zwischen benachbarten Kühlmittelkanälen übertragen,
- die Mehrzahl erster verbindender Fluiddurchgänge in der Innenwand des Gehäusedeckels und in der Innenwand des geschlossenen Endes des Hauptgehäuses vorgesehen ist und der zweite verbindende Fluiddurchgang in dem ersten und/oder dem zweiten Vorsprungsabschnitt vorgesehen ist, wobei
- das zweiteilige Gehäuse ferner wenigstens eine radial durch die Außenwand des zweiteiligen Gehäuses ausgebildete Leitung (60, 61) an einem in dem ersten und/oder dem zweiten Vorsprungsabschnitt angeordneten Raum umfasst, zwischen einerseits dem zweiten verbindenden Fluiddurchgang und andererseits der Innenwand des Gehäusedeckels und/oder der Innenwand des geschlossenen Endes des Hauptgehäuses.

2. Elektrische Maschine nach Anspruch 1, wobei das zweiteilige Gehäuse (200) ferner ausgebildet ist,
- einen ersten Spalt zwischen dem ersten Vorsprungsabschnitt und dem vorderen Wicklungsendabschnitt zu bilden und
- einen zweiten Spalt zwischen dem zweiten Vorsprungsabschnitt und dem hinteren Wicklungsendabschnitt zu bilden,
wobei der erste und der zweite Spalt mit einem wärmeleitfähigen und elektrisch isolierenden Material (30) gefüllt sind.

3. Elektrische Maschine nach einem der Ansprüche 1 bis 2, wobei der erste und der zweite Vorsprungsabschnitt jeweils dichtend am vorderen bzw. hinteren Ende des Statorkerns angeordnet sind.

4. Elektrische Maschine nach einem der Ansprüche 1 bis 3, wobei die ersten verbindenden Fluiddurchgänge U-förmig sind.

5. Elektrische Maschine nach einem der Ansprüche 1 bis 4, wobei der zweite verbindende Fluiddurchgang ein Querdurchgang ist.

6. Elektrische Maschine nach einem der Ansprüche 1 bis 5, wobei die ersten verbindenden Fluiddurchgänge mit einer einzigen ringförmigen Platte (40) verschlossen sind.

7. Elektrische Maschine nach einem der Ansprüche 1 bis 6, wobei das zweiteilige Gehäuse (200) einen zweiten verbindenden Fluiddurchgang und zwei Leitungen umfasst, wobei jede Leitung eine Flüssigkeitsleitung ist, die strömungsverbunden mit dem zweiten verbindenden Fluiddurchgang ist, wodurch ein Kühlmittel zu und von den beiden Leitungen strömen kann.

8. Elektrische Maschine nach einem der Ansprüche 1 bis 7, wobei das zweiteilige Gehäuse (200) ferner ein Kühlmittelkanalende (23) umfasst, wobei das Kühlmittelkanalende ausgelegt ist, einen Kühlmittelfluss zwischen benachbarten Kühlmittelkanälen zu verhindern, und in dem ersten und/oder dem zweiten Vorsprungsabschnitt vorgesehen ist,
wobei die Leitung an einem in dem ersten und/oder dem zweiten Vorsprungsabschnitt angeordneten Raum zwischen einerseits dem Kühlmittelkanalende und andererseits der Innenwand des Gehäusedeckels und/oder der Innenwand des geschlossenen Endes des Hauptgehäuses ausgebildet ist.

9. Elektrische Maschine nach einem der Ansprüche 1 bis 7, wobei der zweite verbindende Fluiddurchgang durch ein Kühlmittelkanalende (23) ersetzt ist, wobei das Kühlmittelkanalende ausgelegt ist, einen Kühlmittelfluss zwischen benachbarten Kühlmittelkanälen zu verhindern.

10. Elektrische Maschine nach Anspruch 9, wobei das zweiteilige Gehäuse (200) ferner einen zweiten verbindenden Fluiddurchgang (22) umfasst, wobei der zweite verbindende Fluiddurchgang ausgelegt ist, ein Kühlmittel zwischen benachbarten Kühlmittelkanälen zu übertragen, und in dem ersten und/oder dem zweiten Vorsprungsabschnitt vorgesehen ist,
wobei die Leitung an einem in dem ersten und/oder dem zweiten Vorsprungsabschnitt angeordneten Raum zwischen einerseits dem zweiten verbindenden Fluiddurchgang und andererseits der Innenwand des Gehäusedeckels und/oder der Innenwand des geschlossenen Endes des Hauptgehäuses ausgebildet ist.

11. Elektrische Maschine nach einem der Ansprüche 1 bis 10, wobei die Leitung eine elektrische Leitung ist, die elektrisch mit dem vorderen Wicklungsendabschnitt oder dem hinteren Wicklungsendabschnitt gekoppelt ist, wodurch die Statorwicklung mit einer Stromquelle gekoppelt werden kann.

12. Elektrische Maschine nach einem der Ansprüche 1 bis 11, wobei der Gehäusedeckel ausgelegt ist, radial an dem Hauptgehäuse positioniert zu werden.

13. Elektrische Maschine nach einem der Ansprüche 1 bis 12, wobei der Gehäusedeckel ausgelegt ist, axial an dem Statorkern positioniert zu werden.

14. Fahrzeug, insbesondere Kraftfahrzeug, insbesondere Elektro- oder Hybridfahrzeug, umfassend eine elektrische Maschine nach einem der Ansprüche 1 bis 13.

## Revendications

1. Machine électrique (100) comprenant un boîtier en deux parties (200) et un noyau de stator (300) renfermé dans ledit boîtier en deux parties (200),
- le noyau de stator ayant
- une extrémité avant et une extrémité arrière, et
- un enroulement statorique pourvu d'une portion d'enroulement d'extrémité avant (310) et d'une portion d'enroulement d'extrémité arrière (320) qui, respectivement, font saillie depuis les extrémités avant et arrière du noyau de stator,
- le boîtier en deux parties comprenant un couvercle de boîtier (210) et un boîtier principal (220),
- le couvercle de boîtier ayant une paroi interne,
- la paroi interne étant pourvue d'une première portion saillante (211) qui fait saillie vers l'extrémité avant du noyau de stator et par-dessus la portion d'enroulement d'extrémité avant,
- le boîtier principal ayant une extrémité ouverte et une extrémité fermée,
- l'extrémité ouverte étant attachable de manière amovible au couvercle de boîtier,
- l'extrémité arrière ayant une paroi interne pourvue d'une seconde portion saillante (212) qui fait saillie vers l'extrémité arrière du noyau de stator et par-dessus la portion d'enroulement d'extrémité arrière,
dans laquelle,
- le boîtier en deux parties a une paroi externe et une paroi interne,
- la paroi interne du boîtier en deux parties étant agencée pour, lorsque le boîtier en deux parties renferme le noyau de stator, définir une pluralité de canaux de refroidissement (20) espacés qui s'étendent axialement par-dessus le noyau de stator et les première et seconde portions saillantes, permettant ainsi à un fluide de refroidissement de s'écouler dans les canaux directement en contact avec une surface externe du noyau de stator, le fluide de refroidissement s'écoulant dans des canaux de refroidissement (20) étant indirectement en contact avec l'enroulement statorique, dans laquelle
- le boîtier en deux parties comprend en outre une pluralité de premiers passages de fluide de liaison (21) et au moins un second passage de fluide de liaison (22),
- la pluralité de premiers passages de fluide de liaison et le second passage de fluide de liaison étant agencés pour transférer le fluide de refroidissement entre des canaux de refroidissement adjacents,
- la pluralité de premiers passages de fluide de liaison étant prévus dans la paroi interne du couvercle de boîtier et dans la paroi interne de l'extrémité arrière du boîtier principal, et le second passage de fluide de liaison étant prévu dans les première et/ou seconde portions saillantes,
dans laquelle,
- le boîtier en deux parties comprend en outre au moins un conduit (60, 61) formé radialement à travers la paroi externe du boîtier en deux parties, au niveau d'un espace agencé dans les première et/ou seconde portions saillantes, entre, d'une part, le second passage de fluide de liaison, et, d'autre part, la paroi interne du couvercle de boîtier et/ou la paroi interne de l'extrémité arrière du boîtier principal.

2. Machine électrique selon la revendication 1, dans laquelle le boîtier en deux parties (200) est en outre agencé pour :
- créer un premier intervalle entre la première portion saillante et la portion d'enroulement d'extrémité avant, et
- créer un second intervalle entre la seconde portion saillante et la portion d'enroulement d'extrémité arrière,
dans laquelle les premier et second intervalles sont remplis d'un matériau conducteur thermique et isolant électrique (30) .

3. Machine électrique selon l'une quelconque des revendications 1 et 2, dans laquelle les première et seconde portions saillantes sont agencées pour être scellées à l'extrémité avant et à l'extrémité arrière du noyau de stator, respectivement.

4. Machine électrique selon l'une quelconque des revendications 1 à 3, dans laquelle les premiers passages de fluide de liaison ont un profil en U.

5. Machine électrique selon l'une quelconque des revendications 1 à 4, dans laquelle le second passage de fluide de liaison est un passage transversal.

6. Machine électrique selon l'une quelconque des revendications 1 à 5, dans laquelle les premiers passages de fluide de liaison sont fermés par une seule plaque en profil d'anneau (40).

7. Machine électrique selon l'une quelconque des revendications 1 à 6, dans laquelle le boîtier en deux parties (200) comprend un second passage de fluide de liaison et deux conduits, dans laquelle chaque conduit est un conduit de liquide couplé fluidiquement à l'un des seconds passages de fluide de liaison, permettant ainsi l'écoulement du liquide de refroidissement vers et depuis les deux conduits.

8. Machine électrique selon l'une quelconque des revendications 1 à 7, dans laquelle le boîtier en deux parties (200) comprend en outre une extrémité de canal de refroidissement (23), l'extrémité de refroidissement étant agencée pour empêcher le fluide de refroidissement de s'écouler entre des canaux de refroidissement adjacents, et étant prévue dans les première et/ou seconde portions saillantes,
dans laquelle le conduit est formé au niveau d'un espace agencé dans les première et/ou seconde portions saillantes, entre, d'une part, l'extrémité de canal de refroidissement et, d'autre part, la paroi interne du couvercle de boîtier et/ou la paroi interne de l'extrémité fermée du boîtier principal.

9. Machine électrique selon l'une quelconque des revendications 1 à 7, dans laquelle le second passage de fluide de liaison est remplacé par une extrémité de canal de refroidissement (23), l'extrémité de canal de refroidissement étant agencée pour empêcher le fluide de refroidissement de s'écouler entre des canaux de refroidissement adjacents.

10. Machine électrique selon la revendication 9, dans laquelle le boîtier en deux parties (200) comprend en outre un second passage de fluide de liaison (22), le second passage de fluide de liaison agencé pour transférer le fluide de refroidissement entre des canaux de refroidissement adjacents, et étant prévu dans les première et/ou seconde portions saillantes.
dans lequel le conduit est formé au niveau d'un espace agencé dans les première et/ou seconde portions saillantes, entre, d'une part, le second passage de fluide de liaison et, d'autre part, la paroi interne du couvercle de boîtier et/ou la paroi interne de l'extrémité fermée du boîtier principal.

11. Machine électrique selon l'une quelconque des revendications 1 à 10, dans laquelle le conduit est un conduit électrique électriquement couplé à la portion d'enroulement d'extrémité avant ou à la portion d'enroulement d'extrémité arrière, permettant ainsi à l'enroulement statorique d'être couplé à une source d'énergie.

12. Machine électrique selon l'une quelconque des revendications 1 à 11, dans laquelle le couvercle de boîtier est agencé pour être positionné radialement sur le boîtier principal.

13. Machine électrique selon l'une quelconque des revendications 1 à 12, dans laquelle le couvercle de boîtier est agencé pour être positionné axialement sur le noyau de stator.

14. Véhicule, en particulier automobile, plus particulièrement véhicule électrique ou hybride, comprenant une machine électrique selon l'une quelconque des revendications 1 à 13.
